# EUROPEAN PATENT APPLICATION

(11) **EP 1 911 359 A2**
(43) Date of publication of application: **16.04.2008**
(21) Application number: 07113191.6
(22) Date of filing: 26.07.2007
(51) Int. Cl.: A23P 1/08, A21C 9/00, A23L 1/00

(54) **Manufacturing apparatus and manufacturing method of rolled sushi**

(30) Priority: 11.10.2006 JP 2006277132
(71) Applicant: Suzumokikou Kabushikigaisha, Nerima-ku Tokyo (JP)
(72) Inventor: Oneda, Ikuya, Nerima-ku, Tokyo (JP); Suzuki, Kazuhiro, Nerima-ku, Tokyo (JP); Hosoda, Toru, Nerima-ku, Tokyo (JP)
(74) Representative: Viering, Jentschura & Partner

(57) **Abstract**

A manufacturing apparatus of rolled sushi is provided with a roll forming sheet (S) fitted to a drive roller (12) and a back tension roller (13) rotating in both of forward and backward directions so as to be capable of transferring, conveying and winding the rice seasoned with vinegar (P) expanded and mounted on the roll forming sheet (S) by mutual forward and backward rotation of the rollers, the roll forming sheet (S) being detachably installed. Further, a pair of two opening and closing rollers (14,15) which are openable and closable are provided in an intermediate portion between the drive roller (12) and the back tension roller (13).

## Description

### BACKGROUND OF THE INVENTION

### Field of the Invention

The present invention relates to a manufacturing apparatus of a rolled sushi for automatically manufacturing the rolled sushi by topping ingredients on rice, which is seasoned with vinegar expanded and supplied onto a roll forming sheet, and winding the roll forming sheet, and a manufacturing method of the same.

### Description of the Conventional Art

Conventionally, as this kind of rolled sushi manufacturing apparatus, as disclosed in Japanese Patent Publication No. 6-46920, there exists a rice expanding apparatus for a rolled sushi provided with a tubular winding apparatus structured such that opening and closing plates are provided in an intermediate lower portion of a pair of two belt guide rollers arranged at a rear portion of a variable speed control conveyor, fixed size expanded rice is transferred onto a flexible belt in which both ends are wound up to a pair of two forward and reverse rotary drums driven by a forward and reverse motor via the belt guide rollers, the opening and closing plates are closed after the belt between the opened opening and closing plates are loosened in a U-shaped form, and the expanded rice can be wound and formed to a tubular rice by pulling the belt from both front and rear sides in accordance with the control of the forward and reverse rotary drums.

### SUMMARY OF THE INVENTION

However, in the conventional apparatus, since the expanded rice on the belt is wound and formed to the tubular rice by loosening the belt between the opened opening and closing plates in the U-shaped form, closing the opening and closing plates, and pulling the belt from both the front and rear sides in accordance with the control of the forward and reverse rotary drums, there is a risk that an unevenness is generated in a thickness in a winding direction at a time when overlapped end portions in the winding direction of the expanded rice are pressed to each other by the closed opening and closing plates. Accordingly, there occurs a problem that a diverse wound shape having a bad appearance is formed.

Further, since the belt between the opened opening and closing plates is conventionally structured such that both ends thereof are only supported by a pair of two belt guide rollers, there is generated an unstable state in which the tensioned belt is vibrated at the time of topping the ingredients on the expanded rice in accordance with a manual work. Accordingly, it becomes hard to execute a uniform expanding work of the ingredients.

Further, in conventional case, since the belt is formed as an integral structure in which the belt can not be attached to and detached from the forward and reverse rotary drums, it is necessary to clean the belt together with the forward and reverse rotary drums at a time of cleaning the belt after the use. Accordingly, the structure becomes complicated, and it is very hard to carry out sanitary maintenance. Further, since it is necessary to replace the belt together with the forward and reverse rotary drums at a time of replacing the broken belt, there is a problem that a cost required for repair becomes expensive.

Accordingly, the present invention is made by taking into consideration the conventionally existing circumstances as mentioned above, and an object of the present invention is to provide a manufacturing apparatus and a manufacturing method of a rolled sushi in which it is possible to uniformly form a thickness in a tightened state at an overlapped end portions in a winding direction of rice seasoned with vinegar along the winding direction, whereby it is possible to easily form the rolled sushi having a good appearance wound state by a simple structure, it is possible to uniformly top ingredients on the rice seasoned with vinegar and expanded on a roll forming sheet in a stable state, and it is possible to easily carry out sanitary maintenance by easily disassembling the roll forming sheet at a time of cleaning or replacing the roll forming sheet after being used,

### Means for Solving the Problem

In order to achieve the object mentioned above, in accordance with the present invention, there is provided a manufacturing apparatus of a rolled sushi, capable of transferring, conveying and winding rice seasoned with vinegar expanded and mounted on an open belt shaped roll forming sheet having flexibility by fixing both ends of the roll forming sheet to a drive roller and a back tension roller rotating in both of forward and backward directions respectively so as to forward and backward rotate mutually, wherein a pair of two opening and closing rollers consisting of rollers attached to leading ends of openable and closable rotary arms are provided at an intermediate portion between the drive roller and the back tension roller, and both ends of the roll forming sheet are respectively wound up to the drive roller and the back tension roller rotating in both of the forward and backward directions via the opening and closing rollers.

The structure is further made such that a topping table movable between a horizontal position, where it is brought into contact with a lower surface of the roll forming sheet, and an oblique position, where it is shunted to a lower side of the roll forming sheet, is provided between a pair of two opening and closing rollers.

The structure is further made such that the manufacturing apparatus comprises fitting grooves provided at respective outer peripheries in axial directions of the drive roller and the back tension roller, and fitting shafts provided at end portions of the roll forming sheet so that the roll forming sheet can be detachably installed by slidingly inserting from one groove end side of the fitting grooves.

There is provided a manufacturing method of a rolled sushi, capable of transferring, conveying and winding rice seasoned with vinegar expanded and mounted on an open belt shaped roll forming sheet having flexibility, by fixing both ends of the roll forming sheet to a drive roller and a back tension roller rotating in both of forward and backward directions respectively so as to forward and backward rotate mutually, wherein the method comprises:
a transfer step of transferring the rice seasoned with vinegar expanded and mounted on the roll forming sheet to a position between a pair of two opening and closing rollers;
a forming step of executing winding formation of the rice seasoned with vinegar by closing the opening and closing rollers after loosening the roll forming sheet between the opened opening and closing rollers in a U-shaped form by backward rotating the drive roller and the back tension roller mutually, and pulling the roll forming sheet by the drive roller;
an end portion forming step of pulling in and winding a protruding end portion, in which the end portions in the winding direction of the expanded rice overlap, to an inner side of a rotary arm, by pulling the roll forming sheet in the winding direction of the rice seasoned with vinegar in accordance with a rotation control of the drive roller so as to forward rotate the rice seasoned with vinegar; and
a finished product unloading step of opening the opening and closing rollers after forming, and thereafter unloading a formed product by tensioning the roll forming sheet on the basis of the rotation control of the drive roller.

The method is further made such that a topping step of topping ingredients on the rice seasoned with vinegar by bringing a topping table into contact with a lower surface of the roll forming sheet between the opening and closing rollers is interposed between the transfer step of transferring the rice seasoned with vinegar expanded and mounted on the roll forming sheet to a position between a pair of two opening and closing rollers, and the forming step of executing the winding formation of the rice seasoned with vinegar by closing the opening and closing rollers after loosening the roll forming sheet between the opened opening and closing rollers in a U-shaped form by backward rotating the drive roller and the back tension roller mutually, and pulling the roll forming sheet by the drive roller.

In accordance with the present invention, since a pair of two opening and closing rollers consisting of the rollers attached to the leading end of the openable and closable rotary arms are provided at the intermediate portion between the drive roller and the back tension roller, and both the ends of the roll forming sheet are respectively wound up to the drive roller and the back tension roller rotating in both of the forward and backward directions via the opening and closing rollers, it is possible to easily form the rolled sushi by a simple structure, and it is possible to uniformly form the thickness in the tightened state at the overlapped end portions in the winding direction of the rice seasoned with vinegar along the winding direction.

Further, since the topping table movable between the horizontal position, where it is brought into contact with the lower surface of the roll forming sheet, and the oblique position, where it is shunted to the lower side of the roll forming sheet, is provided between a pair of two opening and closing rollers, it is possible to uniformly top the ingredients on the rice seasoned with vinegar expanded on the roll forming sheet in a stable state.

Further, since the manufacturing apparatus comprises the fitting grooves provided at the respective outer peripheries in axial directions of the drive roller and the back tension roller, and the fitting shafts provided at the end portions of the roll forming sheet so that the roll forming sheet can be detachably installed by slide inserting from one groove end side of the fitting grooves, it is possible to simply and rapidly execute the attachment and detachment of the roll forming sheet with respect to the fitting grooves. Accordingly, it is possible to efficiently execute a cleaning work, a replacing work or the like of the roll forming sheet, and it is possible to easily carry out sanitary maintenance.

On the other hand, in the manufacturing method of the rolled sushi capable of transferring, conveying and winding the rice seasoned with vinegar and expanded and mounted on the open belt shaped roll forming sheet having flexibility, by fixing both ends of the roll forming sheet to the drive roller and the back tension roller rotating in both of the forward and backward directions respectively so as to forward and backward rotate mutually, the method comprises: the transfer step of transferring the rice seasoned with vinegar expanded and mounted on the roll forming sheet to a position between a pair of two opening and closing rollers; the topping step of topping the ingredients on the rice seasoned with vinegar by bringing the topping table into contact with the lower surface of the roll forming sheet between the opening and closing rollers; the forming step of executing the winding formation of the rice seasoned with vinegar by closing the opening and closing rollers after loosening the roll forming sheet between the opening and closing rollers opened in the U-shaped form by backward rotating the drive roller and the back tension roller mutually, while moving down the topping table, and pulling the roll forming sheet by the drive roller; the end portion forming step of pulling in and winding the protruding end portion, in which the end portions in the winding direction of the expanded rice overlap, to the inner side of the rotary arms, by pulling the roll forming sheet in the winding direction of the rice seasoned with vinegar in accordance with the rotation control of the drive roller so as to forward rotate the rice seasoned with vinegar; and the finished product unloading step of opening the opening and closing rollers after forming, and thereafter unloading the formed product by tensioning the roll forming sheet on the basis of the rotation control of the drive roller. Accordingly, it is possible to uniformly form the thickness in the tightened state at the overlapped end portions in the winding direction of the rice seasoned with vinegar along the winding direction. Further, it is possible to uniformly top the ingredients on the rice seasoned with vinegar expanded on the roll forming sheet in the stable state.

### BRIEF EXPLANATION OF DRAWINGS

Fig. 1 is a side view of a state in which a part of an internal structure of a rolled sushi manufacturing apparatus in a best mode for carrying out the present invention is shown by a chain line;
Fig. 2 is a front view of the rolled sushi manufacturing apparatus;
Fig. 3 is a perspective view of a state in which a winding mechanism portion of the rolled sushi manufacturing apparatus is seen from an oblique leftward direction;
Fig. 4 is a perspective view of a case that a state in which a roll forming sheet is detached from the winding mechanism portion of the rolled sushi manufacturing apparatus is seen from an oblique rightward direction;
Fig. 5 is an exploded perspective view of a state in which an end portion of the roll forming sheet is installed to a drive roller or a back tension roller;
Figs. 6(a), 6(b) and 6(c) show a state in which the end portion of the roll forming sheet is installed to the drive roller or the back tension roller, in which Fig. 6 (a) is a plan view, Fig. 6 (b) is a cross sectional view along a line X-X in Fig. 6(a), and Fig. 6(c) is a partly cut side view; and

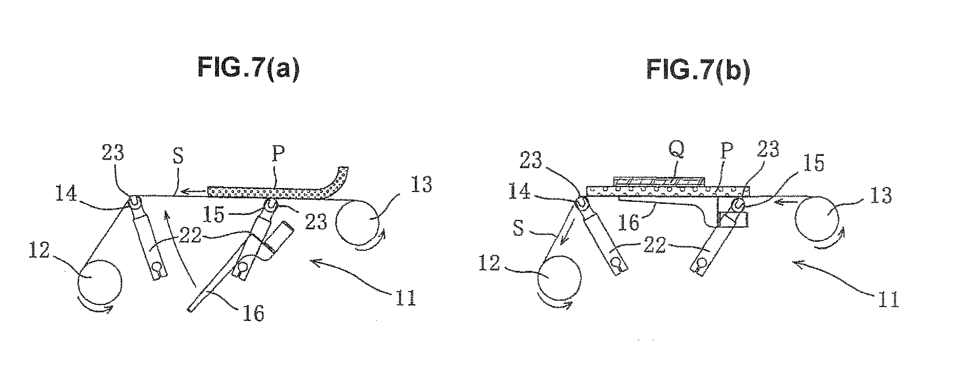

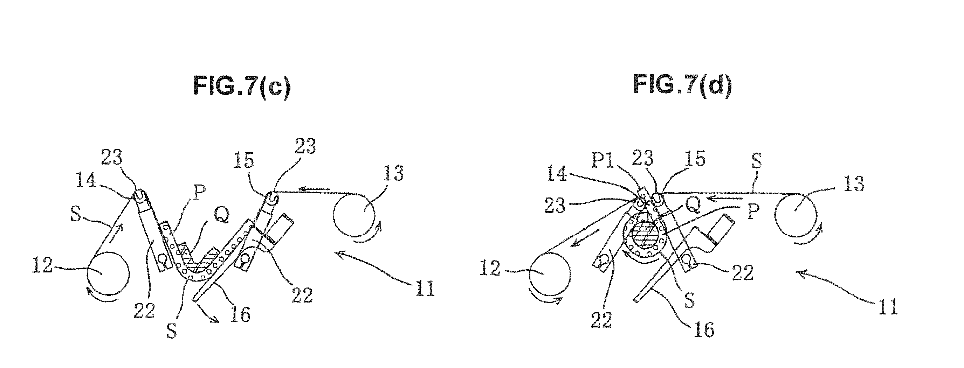

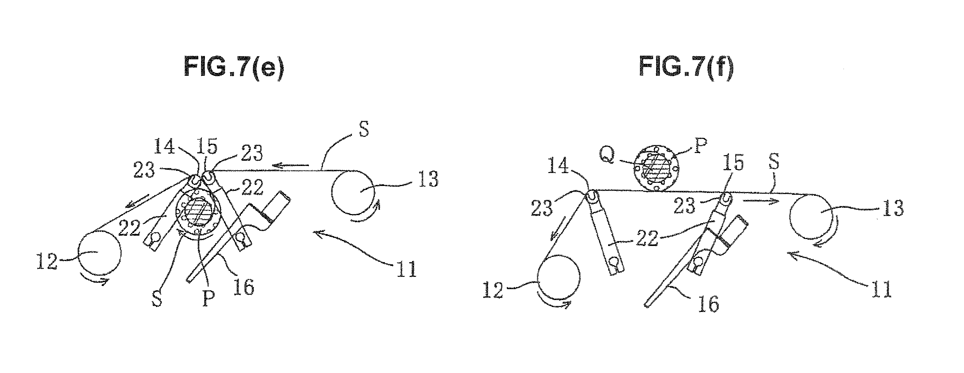

Figs. 7(a), 7(b), 7(c), 7(d), 7(e) and 7(f) show forming procedures and forming motions of the rolled sushi by the roll forming sheet, in which Fig. 7(a) is a side view showing a state in which a rice seasoned with vinegar is transferred to a position between opening and closing rollers by the roll forming sheet, Fig. 7(b) is a side view showing a state in which ingredients are topped after ascending a topping table, Fig. 7 (c) is a side view showing a state in which the roll forming sheet is loosened between the opening and closing rollers, Fig. 7(d) is a side view showing a state in which the ingredients are surrounded with the rice seasoned with vinegar by pulling the roll forming sheet after closing the opening and closing rollers, Fig. 7(e) is a side view showing a state in which a protruding end portion of the expanded rice is pulled in an inner side of a rotary arms so as to be wound, and Fig. 7 (f) is a side view of a state in which a finished product is taken out by tensioning the roll forming sheet.

### DETAILED DESCRIPTION OF PREFERRED EMBODIMENT

A description will be given below of a best mode for carrying out the present invention with reference to the accompanying drawings.

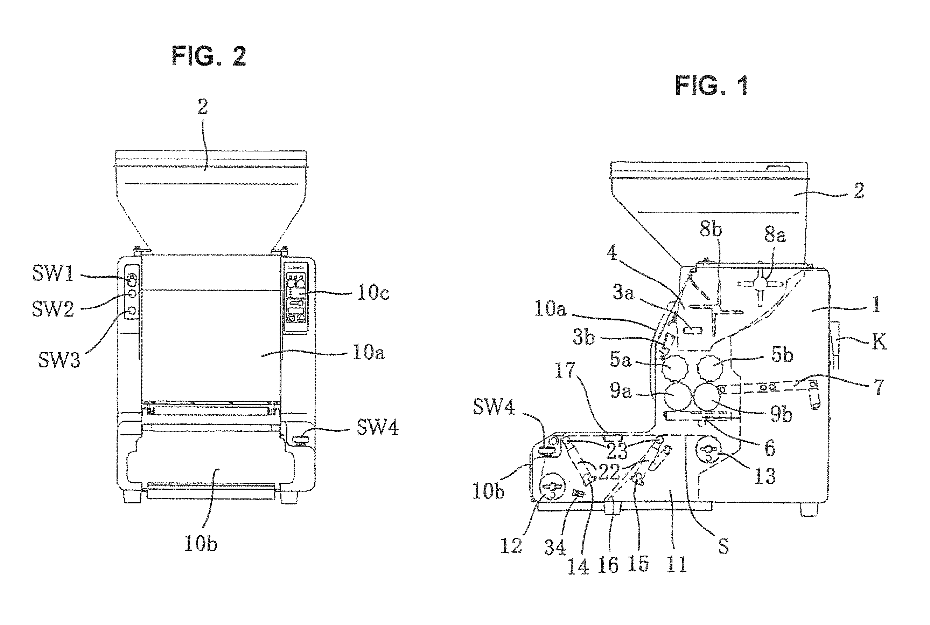

A manufacturing apparatus of a rolled sushi in accordance with the present invention is generally constituted by a rice supplying mechanism portion 1 for supplying input rice seasoned with vinegar P onto a roll forming sheet S capable of sliding transfer, while expanding the rice in a rectangular sheet shape, and a winding mechanism portion 11 for forming a rolled sushi by topping ingredients Q on the rice seasoned with vinegar P on the roll forming sheet S and thereafter winding the rice seasoned with vinegar P in a columnar shape by the roll forming sheet S so as to form a rolled sushi, as shown in Figs. 1 and 2 (the rice seasoned with vinegar P and the ingredients Q are shown in Fig. 7) .

The rice supplying mechanism portion 1 is provided with a hopper portion 2, a rice supplying portion 4 having a rice detecting sensor 3a and a safety cover sensor 3b, vertical conveyor portions 5a and 5b, a shutter portion 6, a thickness adjustment driving portion 7 and the like, as shown in Fig. 1.

In other words, the rice supplying portion 4 formed by a rice scraped-down chute is provided from an upper opening portion having the hopper portion 2 of the rice supplying mechanism portion 1 toward an inner portion, and two agitating blades 8a and 8b having a four-blade structure is rotatably provided within the rice supplying portion 4.

A pair of two columnar vertical conveyor portions 5a and 5b, in which peripheral surfaces are formed so as to have a plurality of circular arc depressions, are arranged in a lower side of a lower opening portion of the rice supplying portion 4 so as to face to each other in a state in which they are away from each other back and forth via the lower opening portion. A pair of two approximately columnar supplying rollers 9a and 9b are arranged in lower sides of both the vertical conveyor portions 5a and 5b in correspondence thereto so as to face to each other in a state in which they are slightly close to each other. An interval between both the supplying rollers 9a and 9b can be changed by sliding one supplying roller 9a (or 9b) in an away direction by a thickness adjustment driving portion 7, whereby a thickness of the sheet-shaped rice seasoned with vinegar P is set.

The shutter portion 6 is provided in the lower sides of both the supplying rollers 9a and 9b, and it is possible to set a length of the rice seasoned with vinegar P fed onto the roll forming sheet S from both the supplying rollers 9a and 9b while being formed in a sheet shape by opening and closing the shutter portion 6 in a lateral direction.

Further, a safety cover 10a is put on an upper center of the rice supplying mechanism portion 1, at a front side of the rolled sushi manufacturing apparatus, as in detail shown in Fig. 2, and a front cover 10b is put on a front side of the winding mechanism portion 11. At this time, a confirmation of a closed state by the safety cover 10a of the rice supplying mechanism portion 1 is detected by the safety cover sensor 3b. Further, a control panel 10c is arranged at a front right side of the rice supplying mechanism portion 1, and a power supply switch SW1, a cleaning mode switch SW2 and a rice supplying operation switch SW3 are arranged at a front left side. Further, an winding operation switch SW4 is arranged at a right side of the winding mechanism portion 1. In this case, a power supply cord K is connected to a back surface side of the rolled sushi manufacturing apparatus via a circuit protector.

Further, the winding mechanism portion 11 is provided with the roll forming sheet S, a drive roller 12, a back tension roller 13, a pair of two opening and closing rollers 14 and 15, a topping table 16, an wind preventing sensor 17 (shown in Fig. 1) and the like, as shown in Figs. 1, 3 and 4. It is possible to simultaneously transfer, convey and wind the rice seasoned with vinegar P expanded and mounted on the roll forming sheet S, by respectively fixing both ends of the open-belt shaped roll forming sheet S having flexibility to the drive roller 12 and the back tension roller 13 rotating in both forward and backward directions so as to forward and backward rotate mutually.

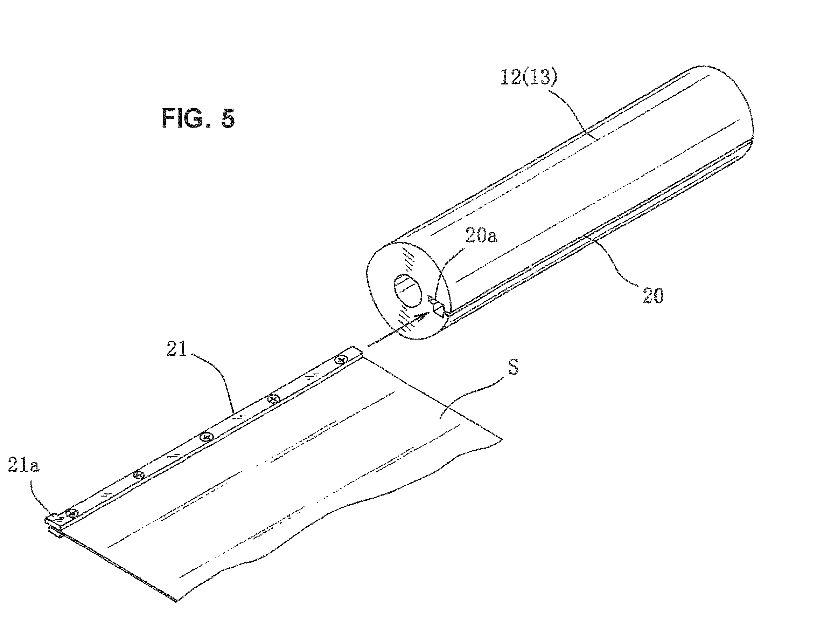

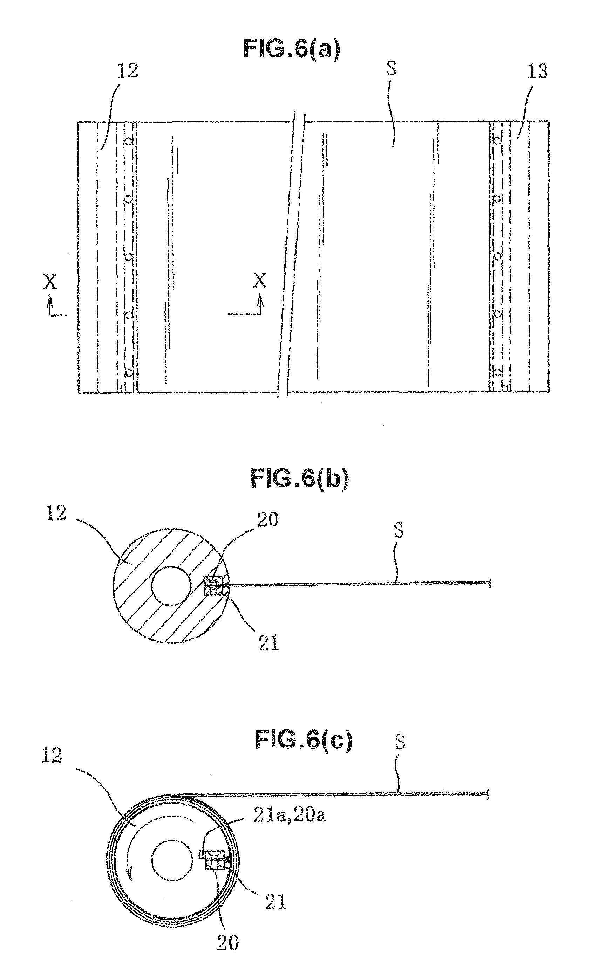

As shown in Figs. 5 and 6, in an outer periphery in an axial direction of each of the drive roller 12 and the back tension roller 13, there is formed a fitting groove 20 formed as a wide rectangular cross sectional hole at a far inner side beyond a slit having a magnitude corresponding to the thickness of the roll forming sheet S. On the other hand, at both end portions in a longitudinal direction of the roll forming sheet S, there is provided a fitting shaft 21 formed as a fitting body portion to the fitting groove 20 by being pinched by band plates from upper and lower sides and fixing both the band plates by screws.

Further, the roll forming sheet S is detachably installed to each of the drive roller 12 and the back tension roller 13, by slidingly inserting the fitting shaft 21 at one end of the roll forming sheet S along the longitudinal direction from the groove end side of any one of the fitting grooves 20, as shown in Fig. 5.

Further, as shown in Figs. 5 and 6, a locking portion 21a formed in a slightly wider projection shape is provided at an end portion of any one of the upper and lower band plates, and a step groove portion 20a for locking the locking portion 21a is provided at one end side of the fitting groove 20 in correspondence thereto. Accordingly, the fitting shaft 21 inserted to the fitting groove 20 does not deviate out of its position toward an insertion opposite side of the fitting groove 20.

A pair of two rotary arms 22 are provided in a rising manner at an intermediate portion between the large-diameter drive roller 12 and the back tension roller 13 so as to be openable and closable with each other along a lower surface of the roll forming sheet S, as shown in Figs. 1, 4 and 7, a pair of two opening and closing rollers 14 and 15 consisting of a small-diameter rollers 23 axially supported to a leading ends of the rotary arms 22 are provided, and the structure is made such that both ends of the roll forming sheet S are wound up respectively to the drive roller 12 and the back tension roller 13 rotating in both the forward and backward directions via the opening and closing rollers 14 and 15.

Further, between the opening and closing rollers 14 and 15, there is provided a flat topping table 16 which can be oscillated between a horizontal position where it is brought into contact with the lower surface of the roll forming sheet S and an oblique position where it is shunted to the lower side of the roll forming sheet S.

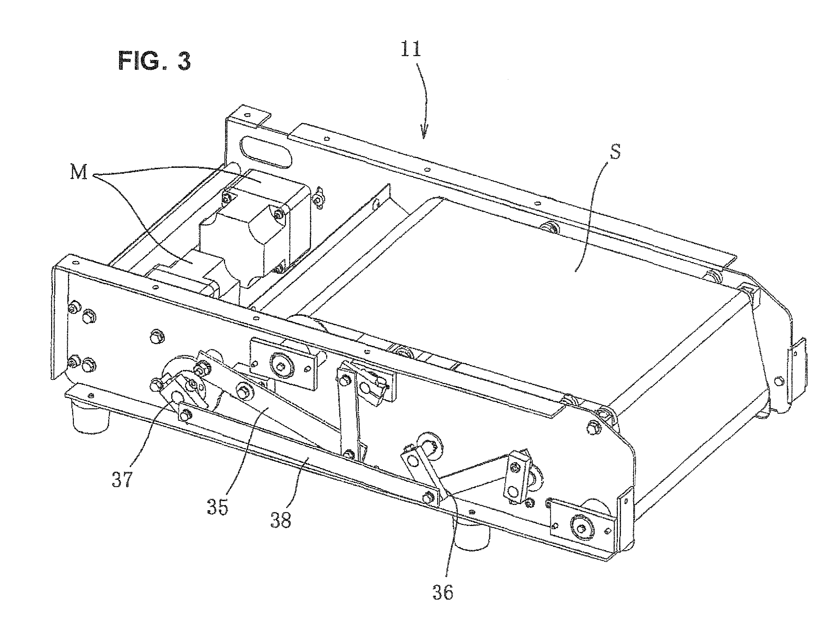

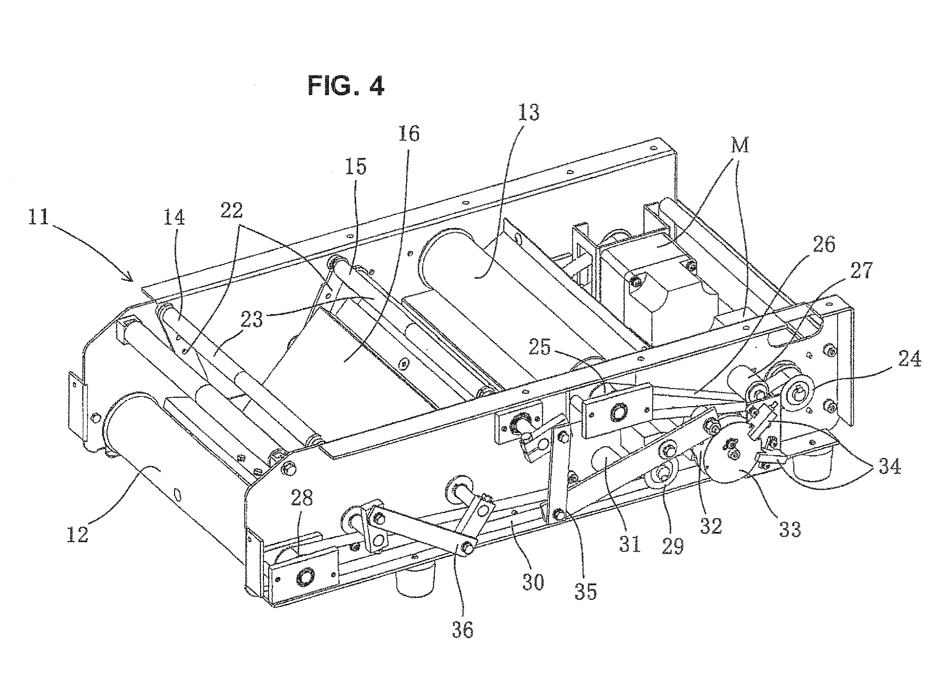

Next, a description will be given of a specific mechanism for executing timely operations of the drive roller 12, the back tension roller 13, the opening and closing rollers 14 and 15, and the topping table 16, with reference to Figs. 3 and 4. In this case, the mechanism does not limit the present invention, and it goes without saying that the other various mechanisms can be employed.

As shown in Fig. 4, a drive motor M for simultaneously driving the topping table 16 and each of the opening and closing rollers 14 and 15 is installed at one end side within a casing of the winding mechanism 11, a timing belt 26 is wound around each of a pulley 24 fitted to an output shaft of the drive motor M, and a pulley 25 fitted to a rotary shaft end portion of the back tension roller 13 and held by a bearing, and an optional tensile force is applied by bringing a tension roller 27 into pressure contact with the timing belt 26.

Further, a timing belt 30 is wound between a pulley 28 fitted to both ends of the rotary shaft of the drive roller 12 and held by a bearing, and a pulley 29 arranged near a lever bearing of the topping table 16, and an optional tensile force is applied by bringing a tension roller 31 into pressure contact with the timing belt 30.

Further, a drive cam 32 of the topping table 16 is installed between the pulleys 24 and 25 of the drive motor M and the back tension roller 13 respectively, and a forming portion signal cam 33 and a plurality of forming portion position sensors 34 are provided at the drive cam 32. One end of a first three-ganged crank link 35 is connected to the drive cam 32, and the other end of the first three-ganged crank link 35 is connected to the rear side opening and closing roller 15.

Further, the front side opening and closing roller 14 is connected to an oscillation shaft of the topping table 16 via a second three-ganged crank link 36. Further, as shown in Fig. 3, a long link arm 38 connects a link joint portion of the second three-ganged crank link 36 and a drive crank 37 attached to the drive cam 32 of the topping table 16.

As mentioned above, when the back tension roller 13 and the drive roller 12 are respectively rotated forward via the timing belts 26 and 30 on the basis of an actuation of the drive motor M, the forming portion position sensor 34 detects the forming portion signal cam 33, and the topping table 16 is brought into contact with the lower surface of the roll forming sheet S by the drive cam 32. Further, at the same time of loosening the roll forming sheet S in the U-shaped form between the opening and closing rollers 14 and 15 by rotating the drive roller 12 in the backward direction to opposingly the forward rotating back tension roller 13, the drive cam 32 moves the opening and closing rollers 14 and 15 in the closing direction to each other via the first three-ganged crank link 35, the second three-ganged crank link 36, the drive crank 37 and the link arm 38 respectively, and the topping table 16 is simultaneously moved to the oblique position so as to be away from the roll forming sheet S.

Next, a description will be given of one example of use, assembly and operation of the best mode structured as mentioned above.

First, the rice seasoned with vinegar P is put into the hopper portion 2 of the rice supplying mechanism 1, and the operation switch SW3 for supplying the rice and the operation switch SW4 for winding are turned on after the power supply switch SW1 has been turned on. At this time, as shown in Fig. 1, the rice seasoned with vinegar P is scraped down from the lower opening portion while being agitated by two agitating blades 8a and 8b within the rice supplying portion 4 formed by a rice scraped-down chute.

Further, the rice seasoned with vinegar P is mounted on the lower roll forming sheet S via the vertical conveyor portions 5a and 5b, the supplying rollers 9a and 9b and the shutter portion 6. At this time, a thickness of the rice seasoned with vinegar P is set by adjusting an interval between both the supplying rollers 9a and 9b by the thickness adjustment driving portion 7. Further, it is possible to set a length of the rice seasoned with vinegar P fed onto the lower roll forming sheet S from both the supplying rollers 9a and 9b while being formed in the sheet shape, on the basis of the opening and closing control of the shutter portion 6.

As shown in Fig. 7(a), the rice seasoned with vinegar P expanded in a fixed size in the sheet shape on the roll forming sheet S is transferred to a position between a pair of two opening and closing rollers 14 and 15.

As shown in Fig. 7 (b), when the rice seasoned with vinegar P is transferred to a position between the opening and closing rollers 14 and 15, the forming portion position sensor 34 detects the forming portion signal cam 33, the topping table 16 is brought into contact with the lower surface of the roll forming sheet S by the drive cam 32, and the ingredients Q are topped on the rice seasoned with vinegar P.

As shown in Fig. 7(c), when the back tension roller 13 and the drive roller 12 are respectively rotated backward in the directions of arrows via the timing belts 26 and 30 on the basis of the control of the drive motor M, the forming portion position sensor 34 detects the forming portion signal cam 33, and the opening and closing rollers 14 and 15 are closed while the roll forming sheet S is loosened in the U-shaped form between the opening and closing rollers 14 and 15, at the same time when the topping table 16 is moved away from the lower surface of the roll forming sheet S by the drive cam 32 actuated by the detection signal. At this time, it is possible to adjust an interval of the rollers 23 at the opening and closing rollers 14 and 15 in correspondence to the thickness of the rice seasoned with vinegar P.

As shown in Fig. 7(d), the winding formation of the rice seasoned with vinegar P is executed by pulling and moving the roll forming sheet S to the forward side by the drive roller 12 rotating in the opposite direction to that in Fig. 7(c). At this time, when the roll forming sheet S is continuously pulled and moved in the winding direction of the rice seasoned with vinegar P on the basis of the rotational control of the drive roller 12, the protruding end portion P1, in which the end portions in the winding direction of the expanded rice seasoned with vinegar P are overlapped, is pulled into the inner side of the rotary arm 22 of the rear side opening and closing roller 15 so as to be wound up. In this case, it is possible to adjust a tightness of the winding of the forming sheet S with respect to the rice seasoned with vinegar P by changing a tension of the forming sheet S.

As shown in Fig. 7(f), the formed product can be taken out by opening the opening and closing rollers 14 and 15 after forming, and thereafter tensioning the roll forming sheet S on the basis of the rotational control of the drive roller 12. As mentioned above, it is possible to uniformly top the ingredients Q on the expanded rice seasoned with vinegar P on the roll forming sheet S in a stable state, and it is possible to form a whole of the rice seasoned with vinegar P in a cylindrical shape having an approximately uniform thickness, with making a thickness at a time of tightening the rice seasoned with vinegar P at the overlapped end portions in the winding direction uniform in the winding direction, that is, without the protruding end portion P1 of the rice seasoned with vinegar P.

Further, in the case of cleaning and replacing the roll forming sheet S, the fitting shaft 21 in one end of the roll forming sheet S is slidingly taken out from any one groove end side of the fitting groove 20 along the longitudinal direction, as shown in Fig. 5. Accordingly, the roll forming sheet S can be easily and rapidly cleaned and replaced in a state of being detached from each of the drive roller 12 and the back tension roller 13.

## Claims

1. A manufacturing apparatus of a rolled sushi, capable of transferring, conveying and winding rice seasoned with vinegar expanded and mounted on an open belt shaped roll forming sheet having flexibility by fixing both ends of said roll forming sheet to a drive roller and a back tension roller rotating in both of forward and backward directions respectively so as to forward and backward rotate mutually, wherein a pair of two opening and closing rollers consisting of rollers attached to leading ends of openable and closable rotary arms are provided at an intermediate portion between said drive roller and the back tension roller, and both ends of the roll forming sheet are respectively wound up to the drive roller and the back tension roller rotating in both of the forward and backward directions via the opening and closing rollers.

2. A manufacturing apparatus of a rolled sushi as claimed in claim 1, wherein a topping table movable between a horizontal position, where it is brought into contact with a lower surface of the roll forming sheet, and an oblique position, where it is shunted to a lower side of the roll forming sheet, is provided between a pair of two opening and closing rollers.

3. A manufacturing apparatus of a rolled sushi as claimed in claim 1 or 2, wherein the manufacturing apparatus comprises fitting grooves provided at respective outer peripheries in axial directions of the drive roller and the back tension roller, and fitting shafts provided at end portions of said roll forming sheet so that the roll forming sheet can be detachably installed by slidingly inserting from one groove end side of said fitting grooves.

4. A manufacturing method of a rolled sushi, capable of transferring, conveying and winding rice seasoned with vinegar expanded and mounted on an open belt shaped roll forming sheet having flexibility, by fixing both ends of said roll forming sheet to a drive roller and a back tension roller rotating in both of forward and backward directions respectively so as to forward and backward rotate mutually, wherein the method comprises:
a transfer step of transferring the rice seasoned with vinegar expanded and mounted on said roll forming sheet to a position between a pair of two opening and closing rollers;
a forming step of executing a winding formation of the rice seasoned with vinegar by closing said opening and closing rollers after loosening said roll forming sheet between the opened opening and closing rollers in a U-shaped form by backward rotating the drive roller and the back tension roller mutually, and pulling the roll forming sheet by said drive roller;
an end portion forming step of pulling in and winding a protruding end portion, in which the end portions in the winding direction of the expanded rice overlap, to an inner side of a rotary arm, by pulling the roll forming sheet in the winding direction of the rice seasoned with vinegar in accordance with a rotation control of the drive roller so as to forward rotate said rice seasoned with vinegar; and
a finished product unloading step of opening the opening and closing rollers after forming, and thereafter unloading a formed product by tensioning the roll forming sheet on the basis of the rotation control of the drive roller.

5. Amanufacturingmethod of a rolled sushi as claimed in claim 4, wherein a topping step of topping ingredients on the rice seasoned with vinegar by bringing a topping table into contact with a lower surface of the roll forming sheet between said opening and closing rollers is interposed between the transfer step of transferring the rice seasoned with vinegar expanded and mounted on said roll forming sheet to a position between a pair of two opening and closing rollers, and the forming step of executing the winding formation of the rice seasoned with vinegar by closing said opening and closing rollers after loosening said roll forming sheet between the opened opening and closing rollers in a U-shaped form by backward rotating the drive roller and the back tension roller mutually, and pulling the roll forming sheet by said drive roller.
